# FASCICULE DE BREVET EUROPEEN

(11) **EP 3 099 558 B1**
(45) Date de publication et mention de la délivrance du brevet: **17.04.2019**
(21) Numéro de dépôt: 15705349.7
(22) Date de dépôt: 30.01.2015
(51) Int. Cl.: G01S 19/13, G05D 1/00, G05D 1/02, B62D 15/02

(54) **PROCEDE DE COMMANDE D'UNE MANOEUVRE DE DEPLACEMENT AUTOMATIQUE D'UN VEHICULE AUTOMOBILE**
VERFAHREN ZUR AUTOMATISCHEN STEUERUNG EINES BEWEGUNGSMANÖVERS EINES KRAFTFAHRZEUGS
METHOD FOR AUTOMATIC CONTROL OF A MOVEMENT MANOEUVRE OF A MOTOR VEHICLE

(30) Priorité: 31.01.2014 FR 1400274
(43) Date de publication de la demande: 07.12.2016
(73) Titulaire: Renault s.a.s., 92100 Boulogne-Billancourt (FR)
(72) Inventeur: DANG VAN NHAN, Christophe, F-94800 Villejuif (FR)
(86) Numéro de dépôt international: PCT/FR2015/050217
(87) Numéro de publication internationale: WO 2015/114269

(56) Documents cités:
- EP-A1- 2 135 788
- DE-A1-102009 048 492
- DE-A1-102012 007 986
- JP-A- 2006 256 382
- US-A- 5 379 033
- US-A1- 2008 033 603
- US-A1- 2009 309 970

## Description

La présente invention concerne le domaine du déplacement automatique d'un véhicule automobile, ci-après véhicule par concision.

Un tel domaine est connu de l'homme du métier. Dans ce domaine, un véhicule est équipé d'un système de déplacement automatique qui comprend un ensemble de capteurs, logiciels et moyens de pilotage mis en oeuvre sur le véhicule pour en assurer son déplacement automatique, connus en soi et qui ne seront pas décrits ici.

Typiquement, le déplacement automatique de véhicule est mis en oeuvre aujourd'hui dans le cadre de manoeuvre de parking automatique d'un véhicule automobile, indépendamment du type de place disponible (créneau, épi, bataille...) .

Toutefois, le conducteur est dans le véhicule, ce qui peut poser des problèmes lorsque la place de parking présente des contraintes d'accessibilité au véhicule par les portes.

Le document US2009309970 décrit une méthode de manoeuvre de déplacement automatique à partir d'un terminal mobile, par l'activation d'un bouton de démarrage. Une fois le bouton de démarrage activé, le véhicule suit la trajectoire prévue sans qu'aucune action de l'utilisateur ne soit nécessaire, ce qui n'est pas sécuritaire.

La présente invention vise à résoudre ces problèmes en proposant une solution visant à commander cette manoeuvre de l'extérieur du véhicule, de façon sécurisée.

Plus précisément, l'invention concerne un procédé de commande d'une manoeuvre de déplacement automatique d'un véhicule automobile entre une position initiale et une position finale, comprenant des étapes consistant à :
- établir une trajectoire entre la position initiale et la position finale du véhicule, et enregistrer la trajectoire dans une mémoire,
- déclencher le déplacement automatique du véhicule depuis la position initiale,
- déplacer automatiquement le véhicule le long de la trajectoire, et
- stopper automatiquement le véhicule en position finale.

Il est essentiellement caractérisé en ce qu'il comprend des étapes consistant à :
- émettre un signal de commande répétitif depuis un téléphone portable intelligent par une action répétitive sur l'un de ses périphériques par un utilisateur, et
- asservir le déplacement automatique du véhicule le long de la trajectoire à la réception dudit signal de commande répétitif par le véhicule.

On peut prévoir en outre des étapes consistant à :
- comparer le signal de commande reçu par le véhicule à un signal de référence enregistré, et
- asservir le déplacement automatique du véhicule le long de la trajectoire en outre au résultat de la comparaison.

On peut prévoir des étapes consistant à :
- encoder le signal de commande de sorte à ce qu'il soit représentatif de l'action exécutée ;
et optionnellement une étape consistant à :
- sélectionner le signal de référence pour la comparaison en fonction de l'encodage du signal de commande.

Dans un mode de réalisation, l'action répétitive consiste à :
- exécuter un mouvement répétitif sur un écran tactile du terminal mobile, sur au moins une touche ou sur une molette du terminal mobile.

Dans un mode de réalisation, l'action répétitive consiste à :
- exécuter un déplacement répétitif du terminal mobile,
Le procédé comprenant en outre :
- enregistrer au moins l'un des paramètres parmi l'accélération, la vitesse et la position du terminal mobile pendant le déplacement répétitif.

Dans un mode de réalisation, l'action répétitive consiste à :
- exécuter une commande vocale répétitive enregistrée dans le microphone du terminal mobile.

On peut prévoir des étapes consistant à :
- asservir la vitesse de déplacement du véhicule à une fonction de la vitesse d'exécution de l'action répétitive sur un périphérique du terminal mobile, ou
- déplacer le véhicule indépendamment de la vitesse d'exécution de l'action répétitive sur un périphérique du terminal mobile.

On peut prévoir en outre une étape consistant à :
- Appairer le terminal mobile et le véhicule.

On peut prévoir en outre une étape consistant à :
- inhiber le déplacement automatique du véhicule.

On peut prévoir en outre une étape consistant à :
- asservir le déplacement à la reconnaissance par le véhicule d'une carte d'accès main-libre.

Grâce à l'invention, il n'est pas nécessaire de disposer d'une télécommande disposant d'un haut niveau de sécurité pour garantir que l'utilisateur peut arrêter la manoeuvre de déplacement en cas d'urgence, par exemple à cause d'obstacle non reconnu par le système de déplacement automatique.

Avantageusement, le téléphone intelligent d'utilisateur peut faire office de télécommande. Il n'est alors pas nécessaire de concevoir et d'équiper l'utilisateur de moyens matériels supplémentaires.

Avantageusement la commande répétitive n'impose pas à l'utilisateur de regarder son téléphone intelligent.

Dans son principe de fonctionnement, la présente invention présente une similitude avec les dispositifs dits « homme-mort » communément utilisés dans la conduite des trains ou dans le contrôle de machines industrielles, mais permet un fonctionnement à distance et par un utilisateur quelconque.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

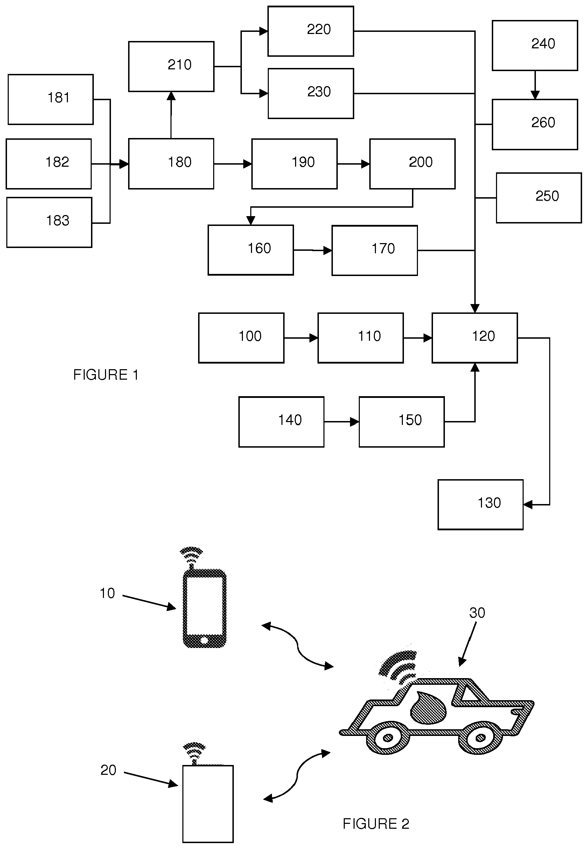

- la figure 1 illustre un mode de réalisation du procédé selon l'invention, et
- la figure 2 illustre un mode de réalisation d'un système permettant la mise en oeuvre du dispositif selon l'invention.

### DESCRIPTION DETAILLEE

Pour commander une manoeuvre de déplacement automatique d'un véhicule automobile entre une position initiale et une position finale, on prévoit un véhicule 30 équipé d'un système de déplacement automatique.

Le système de déplacement automatique est activé par une télécommande portable, c'est à dire un dispositif de communication radiofréquence de préférence à courte portée. La télécommande portable comprend en outre au moins l'un des éléments parmi un calculateur, un bouton, un écran éventuellement tactile, un accéléromètre et un microphone.

Selon l'invention, la télécommande portable est un téléphone portable intelligent 10, plus communément appelé ordiphone ou « smartphone » par anglicisme, qui comprend avantageusement l'ensemble des éléments cités ci-dessus. Ce pourquoi la télécommande portable est appelée ci-après « terminal mobile ».

Lorsqu'un utilisateur souhaite effectuer une manoeuvre de parking, en particulier pour garer son véhicule, on prévoit d'établir 100 une trajectoire entre la position initiale et la position finale du véhicule.

La trajectoire est déterminée de façon connue grâce à des capteurs embarqués, par exemple des capteurs à ultrasons, infra rouge ou radar, éventuellement couplés à des données de positionnement GPS et une carte géographique numérique.

La trajectoire est enregistrée dans une mémoire du véhicule, ou accessible à celui-ci.

Une fois la trajectoire déterminée et le véhicule en position initiale, le déplacement automatique est déclenché 110.

Avantageusement, le déplacement automatique est déclenché par le terminal mobile, ce qui permet que le déclenchement peut être fait à distance, depuis l'extérieur du véhicule.

Une fois le déplacement automatique déclenché, on prévoit 120 de déplacer automatiquement le véhicule le long de la trajectoire, grâce au système de déplacement automatique et de façon connue.

Lorsque le véhicule est en position finale, le déplacement automatique est stoppé automatiquement 130.

Afin que le déplacement automatique du véhicule le long de la trajectoire soit effectué de façon sécurisée, on prévoit 140 d'émettre un signal de commande répétitif depuis un terminal mobile, et 150 d'asservir le déplacement automatique du véhicule le long de la trajectoire à la réception dudit signal de commande répétitif par le véhicule.

Ainsi, de façon similaire aux dispositifs dits « homme-mort », l'absence de réception ou la coupure du signal de commande répétitif peut inhiber le déplacement automatique du véhicule.

On peut augmenter encore le niveau de sécurité du déplacement automatique en prévoyant de 160 comparer le signal de commande reçu par le véhicule à un signal de référence enregistré, et 170 d'asservir le déplacement automatique du véhicule le long de la trajectoire en outre au résultat de la comparaison.

Ainsi, si un signal répétitif est émis depuis un terminal mobile et reçu par le véhicule mais que ce signal n'est pas conforme à un signal de référence enregistré, le déplacement automatique du véhicule peut être inhibé.

Le signal de commande répétitif est émis par le terminal mobile, par une action répétitive sur l'un de ses périphériques 180.

Par exemple, l'action répétitive peut consister à 181 exécuter un mouvement répétitif sur un écran tactile du terminal mobile, par exemple un mouvement continu de va et vient, un mouvement circulaire ou ellipsoïdal, ou tout autre mouvement prédéterminé. La position du doigt ou des doigts sur l'écran tactile est repérée et encodée.

L'action répétitive peut consister à exécuter un mouvement répétitif sur au moins une touche (ou bouton), par exemple une touche de clavier donnée ou une séquence prédéterminée de touches, ou sur une molette du terminal mobile. On peut aussi prévoir un ensemble d'au moins une touche quelconque, le mouvement répétitif étant déterminé par le temps écoulé entre l'activation de deux touches successives, quelles que soient les touches.

L'action répétitive peut consister à 182 exécuter un mouvement répétitif du terminal mobile, par exemple un déplacement du terminal mobile en deux ou trois dimensions.

Le terminal mobile est en général équipé d'au moins l'un des capteurs parmi un accéléromètre, un capteur de mesure de vitesse et un capteur de position.

On peut alors prévoir 210 d'enregistrer au moins l'un des paramètres parmi l'accélération, la vitesse et la position du terminal mobile pendant le déplacement répétitif.

Le terminal mobile est en général également équipé d'un microphone, l'action répétitive peut consister à 183 exécuter une commande vocale répétitive enregistrée grâce au microphone, par exemple « go... go... go... ».

Quelle que soit l'action répétitive, vocale ou manuelle, exécutée sur un périphérique du terminal mobile, on prévoit d'encoder 190, en temps réel, le signal de commande de sorte à ce qu'il soit représentatif de l'action exécutée. De préférence, le terminal mobile transmet simplement des données brutes issues de ses capteurs intégrés, pour laisser l'interprétation de la commande au véhicule.

En particulier, on peut prévoir 200 de sélectionner le signal de référence en fonction de l'encodage du signal de commande. Par exemple le véhicule est équipé d'une mémoire comprenant une pluralité de signaux de commande de référence. En l'espèce on prévoit au moins l'un des signaux de référence parmi :
- au moins un signal de référence correspondant à une commande vocale,
- au moins un signal de référence correspondant à un geste répétitif.

L'encodage du signal de commande permet au véhicule de déterminer si le signal de commande est un signal vocal ou un signal gestuel, c'est à dire comprenant des données d'accélération, de vitesse ou de position, et de sélectionner le signal de référence correspondant.

Si plusieurs signaux de référence sont enregistrés, par exemple un signal de référence correspondant à un balayage de l'écran tactile selon une droite et un signal de référence correspondant à un balayage de l'écran tactile selon un cercle ou une ellipse, on prévoit de sélectionner le signal de référence qui se rapproche le plus du mouvement exécuté sur ou par le terminal mobile.

On peut aussi prévoir de mesurer ou calculer la vitesse d'exécution de l'action répétitive sur un périphérique du terminal mobile, par exemple la vitesse de déplacement sur l'écran tactile ou le nombre d'action sur une touche par unité de temps. On peut alors prévoir 220 d'asservir la vitesse de déplacement du véhicule à une fonction de la vitesse d'exécution de l'action répétitive sur un périphérique du terminal mobile. Alternativement, on peut prévoir 230 de déplacer le véhicule indépendamment de la vitesse d'exécution de l'action répétitive sur un périphérique du terminal mobile.

De préférence, le terminal mobile et le véhicule communiquent selon des ondes radiofréquence à courte portée, par exemple selon une norme Bluetooth, ce qui permet de sécuriser la manoeuvre en garantissant que l'utilisateur du terminal mobile est à courte distance du véhicule. On prévoit alors au préalable 240 d'appairer le terminal mobile et le véhicule.

Pour sécuriser encore la manoeuvre, on peut prévoir 250 d'inhiber le déplacement automatique du véhicule avant l'arrêt en position finale.

Par exemple, par une coupure de transmission du signal de commande ; par la reconnaissance d'un geste sec non répétitif signifiant « stop » ; par la reconnaissance vocale d'un terme spécifique par exemple « stop » ; par la reconnaissance d'un signal de commande non répétitif, figé ou erratique ; ou encore par la reconnaissance de données trop répétitives.

En particulier, on peut prévoir que le signal de commande répétitif soit périodique, en l'espèce pseudo périodique. Une action par un utilisateur sur un périphérique est rarement strictement périodique, il existe le plus souvent un léger aléa qui fait fluctuer la valeur de la période.

On peut alors prévoir de calculer l'écart type du signal périodique et comparer l'écart type calculé à une valeur de référence. Si l'écart type calculé est inférieur à la valeur de référence, cela peut signifier que le signal de commande est généré par une machine plutôt que par un utilisateur. Dans ce cas, on peut prévoir d'inhiber le déplacement automatique du véhicule.

Le véhicule peut être équipé d'un système de commande par carte d'accès main-libre, connu en soi et qui permet typiquement de déverrouiller automatiquement le véhicule par communication sans fil à courte porté entre une carte d'accès main-libre 20 radiofréquence et le véhicule.

Typiquement, lorsqu'un utilisateur, détenteur d'une carte d'accès main-libre, agit sur une poignée de porte du véhicule, un dispositif détecte l'action, réveille le véhicule, et le véhicule interroge la carte d'accès.

A réception de cette interrogation, la carte d'accès renvoie un code d'authentification au véhicule qui, après authentification du code, déverrouille les portes.

Dans ce cas, on peut prévoir en outre 260 d'asservir le déplacement à la reconnaissance par le véhicule d'une carte d'accès main-libre 20.

De préférence, le périmètre de détection de la carte « main-libre » est similaire au périmètre de détection du terminal mobile.

En fonctionnement, on peut prévoir que le signal de commande répétitif par le terminal mobile ou que l'exécution d'un logiciel sur le terminal mobile permettant l'enregistrement et l'émission dudit signal de commande répétitif déclenche un signal de réveil (par exemple via BlueTooth) vers le véhicule.

Le véhicule se réveille et interroge une éventuelle carte d'accès qui se trouverait à proximité.

A réception de cette interrogation, la carte d'accès de l'utilisateur renvoie un code d'authentification vers le véhicule.

Si le véhicule authentifie qu'il s'agit bien de la carte d'accès propre audit véhicule, alors la manoeuvre de déplacement automatique est autorisée. Le véhicule peut en outre démarrer le moteur.

Grâce à cette configuration, le niveau de sécurité est encore plus élevé en s'assurant que c'est *a piori* bien le propriétaire du véhicule qui déclenche la manoeuvre de déplacement automatique, en se reposant sur un dispositif « main-libre » dont la sécurité est éprouvée depuis longtemps.

Comme la communication entre le véhicule et la carte d'accès d'une part, et le terminal mobile d'autre part sont à courte portée, cela permet de s'assurer que l'utilisateur se situe bien à proximité du véhicule lorsqu'il active la manoeuvre de déplacement automatique.

On peut aussi prévoir que la distance maximale de communication entre le véhicule et la carte d'accès soit inférieure à la distance maximale de communication entre le véhicule et le terminal mobile. Ce qui permet par exemple que l'authentification de la carte d'accès soit effectuée à courte distance, ce qui autorise l'initialisation de la manoeuvre de déplacement automatique, mais que l'utilisateur peut ensuite s'éloigner pour contrôler plus confortablement la manoeuvre.

## Revendications

1. Procédé de commande d'une manoeuvre de déplacement automatique d'un véhicule automobile (30) entre une position initiale et une position finale, comprenant des étapes consistant à :
- (100) établir une trajectoire entre la position initiale et la position finale du véhicule (30), et enregistrer la trajectoire dans une mémoire,
- (110) déclencher le déplacement automatique du véhicule (30) depuis la position initiale,
- (120) déplacer automatiquement le véhicule (30) le long de la trajectoire, et
- (130) stopper automatiquement le véhicule (30) en position finale,
**caractérisé en ce qu'**il comprend des étapes consistant à :
- (140) émettre un signal de commande répétitif depuis un téléphone portable intelligent (10) par une action répétitive sur l'un de ses périphériques (180) par un utilisateur, et
- (150) asservir le déplacement automatique du véhicule (30) le long de la trajectoire à la réception dudit signal de commande répétitif par le véhicule (30).

2. Procédé selon la revendication 1, comprenant en outre des étapes consistant à :
- (160) comparer le signal de commande reçu par le véhicule (30) à un signal de référence enregistré, et
- (170) asservir le déplacement automatique du véhicule (30) le long de la trajectoire en outre au résultat de la comparaison.

3. Procédé selon l'une quelconque des revendications précédentes, comprenant des étapes consistant à :
- (190) encoder le signal de commande de sorte à ce qu'il soit représentatif de l'action exécutée ;
le procédé comprenant optionnellement une étape consistant à :
- (200) sélectionner le signal de référence pour la comparaison en fonction de l'encodage du signal de commande.

4. Procédé selon la revendication 3, dans lequel l'action répétitive consiste à :
- (181) exécuter un mouvement répétitif sur un écran tactile du terminal mobile (10), sur au moins une touche ou sur une molette du terminal mobile (10).

5. Procédé selon la revendication 3, dans lequel l'action répétitive consiste à :
- (182) exécuter un déplacement répétitif du terminal mobile (10),
Le procédé comprenant en outre :
- (210) enregistrer au moins l'un des paramètres parmi l'accélération, la vitesse et la position du terminal mobile (10) pendant le déplacement répétitif.

6. Procédé selon la revendication 3, dans lequel l'action répétitive consiste à :
- (183) exécuter une commande vocale répétitive enregistrée dans le microphone du terminal mobile (10).

7. Procédé selon l'une quelconque des revendications 4 ou 5, comprenant :
- (220) asservir la vitesse de déplacement du véhicule (30) à une fonction de la vitesse d'exécution de l'action répétitive sur un périphérique du terminal mobile (10), ou
- (230) déplacer le véhicule (30) indépendamment de la vitesse d'exécution de l'action répétitive sur un périphérique du terminal mobile (10).

8. Procédé selon l'une quelconque des revendications précédentes, comprenant en outre une étape consistant à :
- (240) Appairer le terminal mobile (10) et le véhicule (30).

9. Procédé selon l'une quelconque des revendications précédentes, comprenant en outre une étape consistant à :
- (250) inhiber le déplacement automatique du véhicule (30).

10. Procédé selon l'une quelconque des revendications précédentes, comprenant en outre une étape consistant à :
- (260) asservir le déplacement à la reconnaissance par le véhicule (30) d'une carte d'accès main-libre (20).

## Patentansprüche

1. Verfahren zur Steuerung eines automatischen Bewegungsmanövers eines Kraftfahrzeugs (30) zwischen einer Anfangsposition und einer Endposition, welches die folgenden Schritte umfasst:
- (100) Festlegen einer Trajektorie zwischen der Anfangsposition und der Endposition des Fahrzeugs (30) und Speichern der Trajektorie in einem Speicher,
- (110) Auslösen der automatischen Bewegung des Fahrzeugs (30) aus der Anfangsposition,
- (120) automatisches Bewegen des Fahrzeugs (30) entlang der Trajektorie und
- (130) automatisches Anhalten des Fahrzeugs (30) in der Endposition,
**dadurch gekennzeichnet, dass** es die folgenden Schritte umfasst:
- (140) Senden eines sich wiederholenden Signals von einem Smartphone (10) aus durch eine sich wiederholende Aktion, die auf eines seiner Peripherieelemente (180) einwirkt, durch einen Benutzer, und
- (150) Regeln der automatischen Bewegung des Fahrzeugs (30) entlang der Trajektorie beim Empfang des sich wiederholenden Steuersignals durch das Fahrzeug (30).

2. Verfahren nach Anspruch 1, welches außerdem die folgenden Schritte umfasst:
- (160) Vergleichen des Steuersignals, das durch das Fahrzeug (30) empfangen wurde, mit einem gespeicherten Referenzsignal, und
- (170) Regeln der automatischen Bewegung des Fahrzeugs (30) entlang der Trajektorie außerdem in Abhängigkeit vom Ergebnis des Vergleichs.

3. Verfahren nach einem der vorhergehenden Ansprüche, welches die folgenden Schritte umfasst:
- (190) Codieren des Steuersignals derart, dass es für die ausgeführte Aktion repräsentativ ist; wobei das Verfahren optional den folgenden Schritt umfasst:
- (200) Auswählen des Referenzsignals für den Vergleich in Abhängigkeit von der Codierung des Steuersignals.

4. Verfahren nach Anspruch 3, wobei die sich wiederholende Aktion in Folgendem besteht:
- (181) Ausführen einer sich wiederholenden Bewegung auf einem Berührungsbildschirm des mobilen Endgeräts (10), auf wenigstens einer Taste oder auf einem Rändelrad des mobilen Endgeräts (10).

5. Verfahren nach Anspruch 3, wobei die sich wiederholende Aktion in Folgendem besteht:
- (182) Ausführen einer sich wiederholenden Bewegung des mobilen Endgeräts (10),
wobei das Verfahren außerdem umfasst:
- (210) Speichern wenigstens eines der Parameter Beschleunigung, Geschwindigkeit und Position des mobilen Endgeräts (10) während der sich wiederholenden Bewegung.

6. Verfahren nach Anspruch 3, wobei die sich wiederholende Aktion in Folgendem besteht:
- (183) Ausführen eines sich wiederholenden Sprachbefehls, der im Mikrofon des mobilen Endgeräts (10) gespeichert ist.

7. Verfahren nach einem der Ansprüche 4 oder 5, welches umfasst:
- (220) Regeln der Bewegungsgeschwindigkeit des Fahrzeugs (30) auf eine Funktion der Ausführungsgeschwindigkeit der sich wiederholenden Aktion auf einem Peripherieelement des mobilen Endgeräts (10), oder
- (230) Bewegen des Fahrzeugs (30) unabhängig von der Ausführungsgeschwindigkeit der sich wiederholenden Aktion auf einem Peripherieelement des mobilen Endgeräts (10).

8. Verfahren nach einem der vorhergehenden Ansprüche, welches außerdem den folgenden Schritt umfasst:
- (240) Paarung des mobilen Endgeräts (10) und des Fahrzeugs (30).

9. Verfahren nach einem der vorhergehenden Ansprüche, welches außerdem den folgenden Schritt umfasst:
- (250) Hemmen der automatischen Bewegung des Fahrzeugs (30).

10. Verfahren nach einem der vorhergehenden Ansprüche, welches außerdem den folgenden Schritt umfasst:
- (260) Regeln der Bewegung in Abhängigkeit vom Erkennen einer Karte für handfreien Zugang (20) durch das Fahrzeug (30).

## Claims

1. Method for controlling an automatic movement maneuver of a motor vehicle (30) between an initial position and a final position, comprising steps consisting in:
- (100) establishing a path between the initial position and the final position of the vehicle (30), and recording the path in a memory,
- (110) initiating automatic movement of the vehicle (30) from the initial position,
- (120) automatically moving the vehicle (30) along the path, and
- (130) automatically stopping the vehicle (30) in the final position,
**characterized in that** it comprises steps consisting in:
- (140) emitting a repetitive control signal from a mobile smartphone (10) through a repetitive action on one of the peripherals (180) thereof by a user, and
- (150) slaving the automatic movement of the vehicle (30) along the path to the reception of said repetitive control signal by the vehicle (30).

2. Method according to Claim 1, furthermore comprising steps consisting in:
- (160) comparing the control signal received by the vehicle (30) with a recorded reference signal, and
- (170) slaving the automatic movement of the vehicle (30) along the path furthermore to the result of the comparison.

3. Method according to either of the preceding claims, comprising steps consisting in:
- (190) encoding the control signal so that it represents the action carried out;
the method optionally comprising a step consisting in:
- (200) selecting the reference signal for the comparison as a function of the encoding of the control signal.

4. Method according to Claim 3, wherein the repetitive action consists in:
- (181) carrying out a repetitive movement on a touch screen of the mobile terminal (10), on at least one key or on a control knob of the mobile terminal (10).

5. Method according to Claim 3, wherein the repetitive action consists in:
- (182) carrying out a repetitive movement of the mobile terminal (10),
the method furthermore comprising:
- (210) recording at least one of the parameters among the acceleration, the speed and the position of the mobile terminal (10) during the repetitive movement.

6. Method according to Claim 3, wherein the repetitive action consists in:
- (183) carrying out a repetitive voice command which is recorded in the microphone of the mobile terminal (10) .

7. Method according to either of Claims 4 and 5, comprising:
- (220) slaving the speed of movement of the vehicle (30) to a function of the speed with which the repetitive action is carried out on a peripheral of the mobile terminal (10), or
- (230) moving the vehicle (30) independently of the speed with which the repetitive action is carried out on a peripheral of the mobile terminal (10).

8. Method according to any one of the preceding claims, furthermore comprising a step consisting in:
- (240) pairing the mobile terminal (10) and the vehicle (30).

9. Method according to any one of the preceding claims, furthermore comprising a step consisting in:
- (250) preventing automatic movement of the vehicle (30) .

10. Method according to any one of the preceding claims, furthermore comprising a step consisting in:
- (260) slaving the movement to the recognition by the vehicle (30) of a hands-free access card (20).
